# EUROPEAN PATENT APPLICATION

(11) **EP 2 682 935 A1**
(43) Date of publication of application: **08.01.2014**
(21) Application number: 13174637.2
(22) Date of filing: 02.07.2013
(51) Int. Cl.: G09G 3/36

(54) **Method for powersaving of LCD and an electronic device thereof**

(30) Priority: 03.07.2012 KR 20120072346
(71) Applicant: Samsung Electronics Co., Ltd, Gyeonggi-do 443-742 (KR)
(72) Inventor: Lee, Seung-Jae, Daejeon (KR); Kim, Dong Sub, Gyeonggi-do (KR); Shin, Hyun-Chang, Gyeonggi-do (KR)
(74) Representative: Nederlandsch Octrooibureau

(57) **Abstract**

An apparatus and a method for determining a polarity inversion scheme of a Liquid Crystal Display (LCD) in an electronic device are provided. The method for determining the polarity inversion scheme includes detecting a brightness of a region where the electronic device is placed, and determining the polarity inversion scheme of the LCD by considering the regional brightness of the electronic device.

## Description

### FIELD OF THE INVENTION

The present disclosure relates generally to an electronic device. More particularly, the present invention relates to an apparatus and a method for improving power saving of a Liquid Crystal Display (LCD) panel.

### BACKGROUND

A Liquid Crystal Display (LCD) screen is a flat panel display that uses the light modulating properties of liquid crystals according to light transmission changes caused by different voltages applied to both ends of the LCD per pixel.

In operation, the LCD panel is subject to image crosstalk, flicker, and screen noise. To overcome these interferences, the LCD panel can adopt polarity inversion which periodically inverts the voltage applied to electrodes of the pixel.

The polarity inversion can include frame inversion, line inversion, column inversion, dot inversion, and the like. The polarity inversion schemes can exhibit different characteristics. For example, the dot inversion most effectively removes the crosstalk and the flicker noise, and the frame inversion consumes the lowest power.

However, since the LCD panel uses only the fixed polarity inversion scheme, the effect produced by the polarity inversion is limited.

### SUMMARY

To address the above-discussed deficiencies of the prior art, it is one aspect of the present invention to provide an apparatus and a method for using polarity inversion scheme in an LCD panel.

Another aspect of the present invention is to provide an apparatus and a method for adaptively using polarity inversion in an LCD panel.

Yet another aspect of the present invention is to provide an apparatus and a method for adaptively applying polarity inversion to an LCD panel in an electronic device.

Still another aspect of the present invention is to provide an apparatus and a method for adaptively using polarity inversion in an LCD panel according to surrounding environment information in an electronic device.

A further aspect of the present invention is to provide an apparatus and a method for adaptively applying polarity inversion to an LCD panel according to an illuminance in an electronic device.

According to one aspect of the present invention, a method for selecting a polarity inversion scheme of a Liquid Crystal Display (LCD) in an electronic device includes detecting an ambient illuminance level around the electronic device, and determining the polarity inversion scheme of the LCD corresponding to the detected ambient illuminance level based on predetermined criteria.

According to another aspect of the present invention, an electronic includes: a Liquid Crystal Display (LCD); a sensor for detecting an ambient illuminance level; one or more processors; a memory; and a program stored in the memory and driven by the one or more processors, wherein the program detects the ambient illuminance level via the sensor around the electronic device, and determines a polarity inversion scheme of the LCD corresponding to the detected ambient illuminance level according to predetermined criteria.

According to yet another aspect of the present invention, an electronic device includes a Liquid Crystal Display (LCD); a sensor for detecting an ambient illuminance level; and a processor for determining a polarity inversion scheme of the LCD corresponding to the detected ambient illuminance level around the electronic device according to predetermined criteria.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram of an electronic device according to an exemplary embodiment of the present invention;

FIG. 2 is a detailed block diagram of a display according to an exemplary embodiment of the present invention;

FIG. 3 is a diagram of polarity inversion schemes according to an exemplary embodiment of the present invention;

FIG. 4 is a flowchart of a method for selecting the polarity inversion scheme in the electronic device according to one exemplary embodiment of the present invention;

FIG. 5 is a flowchart of a method for selecting the polarity inversion scheme in the electronic device according to another exemplary embodiment of the present invention; and

FIG. 6 is a flowchart of a method for selecting the polarity inversion scheme in the electronic device according to yet another exemplary embodiment of the present invention.

Throughout the drawings, like reference numerals will be understood to refer to like parts, components and structures.

### DETAILED DESCRIPTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide a technique for adaptively using polarity inversion of a Liquid Crystal Display (LCD) panel implemented in an electronic device.

Hereinafter, the electronic device implementing the LCD panel may include a portable electronic device, portable terminal, mobile station, Personal Digital Assistant (PDA), laptop computer, smart phone, netbook, television, Mobile Internet Device (MID), Ultra Mobile Personal Computer (UMPC), tablet PC, desktop computer, smart TV, digital camera, wrist watch, navigation system, and MP3 player. The electronic device may be a wireless electronic device combining two or more functions of those devices or any duplex system.

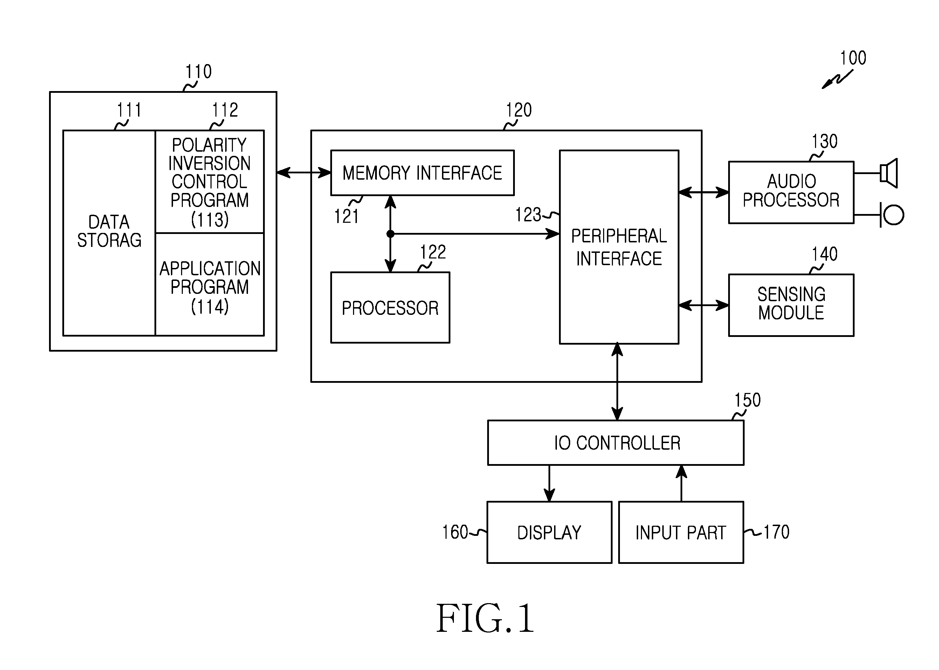

FIG. 1 is a block diagram of the electronic device according to an exemplary embodiment of the present invention.

As shown in FIG. 1, the electronic device 100 includes a memory 110, a processor unit 120, an audio processor 130, a sensing module 140, an Input Output (IO) controller 150, a display 160, and an input part 170. Herein, a plurality of memories 110 may be employed.

The memory 110 can include data storage 111 for storing data generated during program execution, and a program storage 112 for storing a program to control operations of the electronic device 100.

The data storage 111 stores a reference value for changing a polarity inversion scheme.

The program storage 112 can include a polarity inversion control program 113 and at least one application program 114. Herein, the program in the program storage 112 may be referred to as an instruction set, which is a set of instructions.

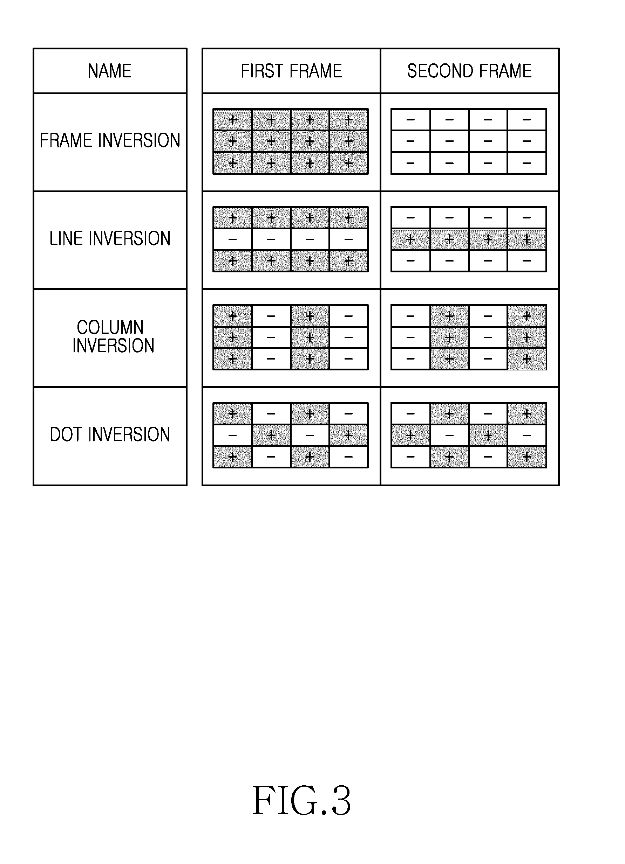

The polarity inversion control program 113 includes at least one software component for determining the polarity inversion scheme of the display 160 according to surrounding environment information obtained by the sensing module 140. For example, the polarity inversion control program 113 can determine one of a frame inversion scheme, a line inversion scheme, a column inversion scheme, and a dot inversion scheme of FIG. 3 as the polarity inversion scheme of the display 160 according to the surrounding environment information. More specifically, the human eye, which is sensitive to the ambient illuminance, is insensitive to the color change in the bright state but sensitive to the color change in the dark state. Accordingly, the polarity inversion control program 113 can determine the polarity invention scheme of an LCD panel considering the sensitivity of human eyes. More specifically, when the ambient illuminance is greater than a reference value, the polarity inversion control program 113 can determine a frame inversion scheme as an appropriate polarity inversion in the display 160. By contrast, when the ambient illuminance is smaller than or equal to the reference value, the polarity inversion control program 113 may determine a dot inversion scheme as an appropriate polarity inversion scheme. Herein, the reference value represents a value for determining the polarity inversion scheme when a user cannot perceive the flicker at the corresponding illuminance, and also can vary according to characteristics of the LCD. Herein, the surrounding environment information can include brightness information including at least one of the illuminance and the contrast.

The application program 114 includes a software component for at least one application program installed in the electronic device 100.

The processor unit 120 can include a memory interface 121, at least one processor 122, and a peripheral interface 123. Herein, the memory interface 121, the at least one processor 122, and the peripheral interface 123 of the processor unit 120 can be integrated onto at least one integrated circuit or embodied separately.

The memory interface 121 controls the access of the component such as processor 122 or peripheral interface 123, to the memory 110.

The peripheral interface 123 controls connections between an IO peripheral of the electronic device 100, and the processor 122 and the memory interface 121.

The processor 122 controls the electronic device 100 to provide various multimedia services using at least one software program. The processor 122 executes at least one software program stored in the memory 110 and thus controls to provide the service corresponding to the program. For example, the processor 122 can determine the polarity inversion scheme of the display 160 according to the brightness information obtained by the sensing module 140 by running the polarity inversion control program 113. For example, when the ambient illuminance is greater than a reference value, the processor 122 can determine the frame inversion scheme as an appropriate polarity inversion scheme of the display 160. By contrast, when the ambient illuminance is smaller than or equal to the reference value, the processor 122 can determine the dot inversion scheme as an appropriate polarity inversion scheme.

The audio processor 130 provides an audio interface between the user and the electronic device 100 through a speaker and a microphone.

The sensing module 140 collects the surrounding environment information of the electronic device 100. For example, the sensing module 140, which includes an illuminance sensor, can measure a regional illuminance of the electronic device 100.

The IO controller 150 provides an interface between the IO device such as display 160 and input part 170, and the peripheral interface 123.

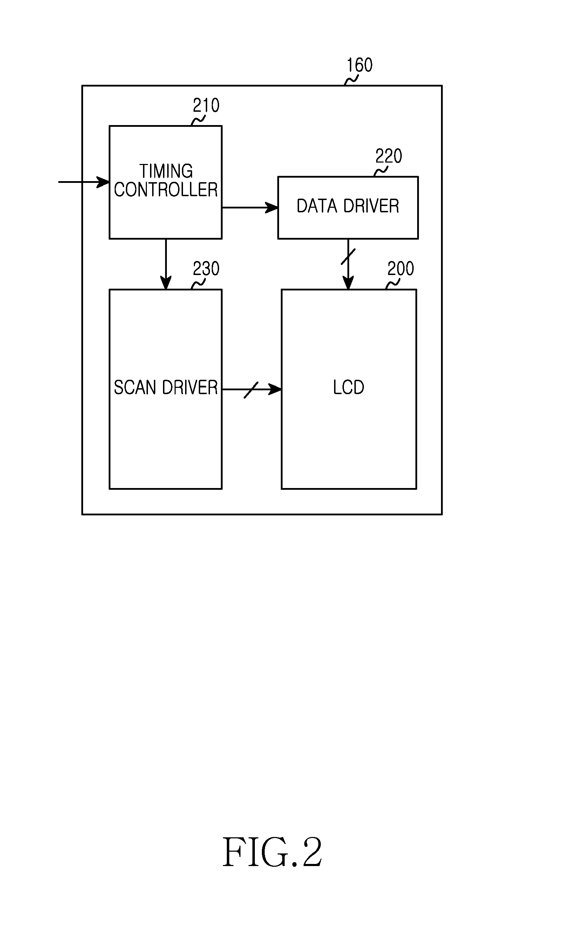

The display 160 displays status information of the electronic device 100, a character input by the user, a moving picture, and a still picture. The display 160 can be constructed as shown in FIG. 2 so as to configure the LCD according to the polarity inversion scheme determined by the processor 122.

The input part 170 provides input data generated by a user's selection to the processor unit 120 through the IO controller 150. For doing so, the input part 170 can include a keypad including at least one hardware button, and a touchpad for detecting touch. For example, the input part 170 can provide touch information of an electronic pen or a finger detected through the touchpad, to the processor unit 120 via the IO controller 150.

The electronic device 100 may further include a communication system (not shown) for performing at least one of a voice communication function and a data communication function. In so doing, the communication system may be divided into a plurality of communication sub-modules for supporting different networks. For example, the communication network includes, but not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a wireless Local Area Network (LAN), a Bluetooth network, and Near Field Communication (NFC).

FIG. 2 is a detailed block diagram of the display according to an exemplary embodiment of the present invention.

As shown in FIG. 2, the display 160 can include an LCD 200, a timing controller 210, a data driver 220, and a scan driver 230.

The LCD 200 includes a plurality of pixels arranged in a matrix structure and sets the polarity inversion scheme under control of the data driver 220.

The timing controller 210 can provide a timing control signal and pixel data to the data driver 220 and the scan driver 230. In addition, the timing controller 210 can control the data driver 220 to set the polarity inversion scheme provided from the processor 122, to the polarity inversion scheme.

The data driver 220 can drive data lines of the LCD 200 under control of the timing controller 210. In so doing, the data driver 220 can configure the LCD 200 in the polarity inversion scheme determined by the processor 122 under the control of the timing controller 210. For example, when the processor 122 determines the dot inversion scheme as the polarity inversion scheme, the data driver 220 can convert pixel data of a first horizontal line to a pixel signal of the polarity (+) (-) (+) (-) (+) (-) using a Digital/Analog Converter (DAC) array. The data driver 220 can convert pixel data of a second horizontal line to a pixel signal of the polarity (-) (+) (-) (+) (-) (+) using the DAC array.

The scan driver 230 can drive gate lines of the LCD 200 under the control of the timing controller 210.

In this exemplary embodiment, the electronic device 100 can determine the polarity inversion scheme of the LCD 200 according to the brightness information using the processor 122.

Alternatively, the electronic device 100 may determine the polarity inversion scheme of the LCD 200 according to the brightness information using the timing controller 210. In this case, the processor 122 can send the brightness information collected by the sensing module 140 to the timing controller 210 of the display 160. Hence, the timing controller 120 can determine the polarity inversion scheme of the LCD 200 according to the brightness information provided from the processor 122.

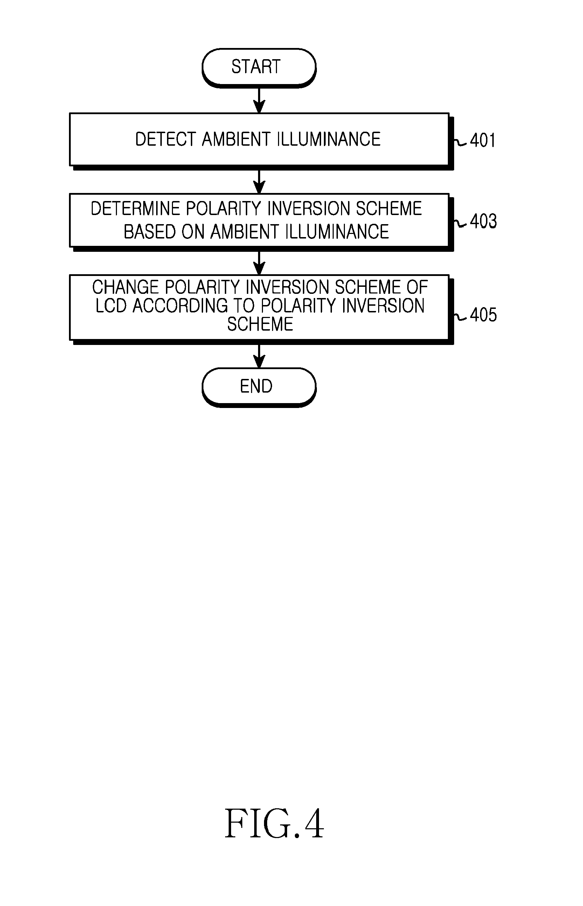

FIG. 4 is a flowchart of a method for selecting the polarity inversion scheme in the electronic device according to one exemplary embodiment of the present invention.

Referring to FIG. 4, the electronic device detects the ambient illuminance in step 401. For example, the electronic device can measure the ambient illuminance using the sensing module 140.

In step 403, the electronic device determines the polarity inversion scheme of the LCD by considering the ambient illuminance. For example, the electronic device can select the polarity inversion scheme corresponding to the ambient illuminance from a polarity inversion table including the polarity inversion information based on the detected illuminance. For example, the electronic device may determine the polarity inversion scheme by comparing the ambient illuminance with a predetermined reference value of the polarity inversion scheme. Herein, the predetermined reference value of the polarity inversion scheme indicates a reference value corresponding to the polarity inversion scheme which does not allowing the user to recognize the flicker noise a current illuminance. The predetermined reference value of the polarity inversion scheme may be set to an initial value of the electronic device or determined by the user.

In step 405, the electronic device changes the polarity inversion scheme of the LCD to the polarity inversion scheme determined in step 403.

As explained above, the electronic device can change the polarity inversion scheme of the LCD according to the detected ambient illuminance level. In more detail, the human eye, which is sensitive to the ambient illuminance, is insensitive to the color change in the bright state but sensitive to the color change in the dark state. That is, the user is insensitive to the flicker noise of the LCD in the bright state and sensitive to the flicker noise of the LCD in the dark state. Accordingly, the electronic device can use the polarity inversion scheme (e.g., the dot inversion) which effectively removes the flicker noise in a dark region with the low illuminance.

By contrast, in a bright region with the higher illuminance level, the user cannot perceive the flicker noise even using the frame inversion scheme which removes the flicker noise less effectively than the dot inversion. Hence, the electronic device can use the polarity inversion scheme, which consumes less power, to the bright region of the great illuminance and thus saves the power consumption. In so doing, the electronic device can use a selected polarity inversion scheme not allowing the user to perceive the flicker noise among the polarity inversion schemes and also uses less power during operation.

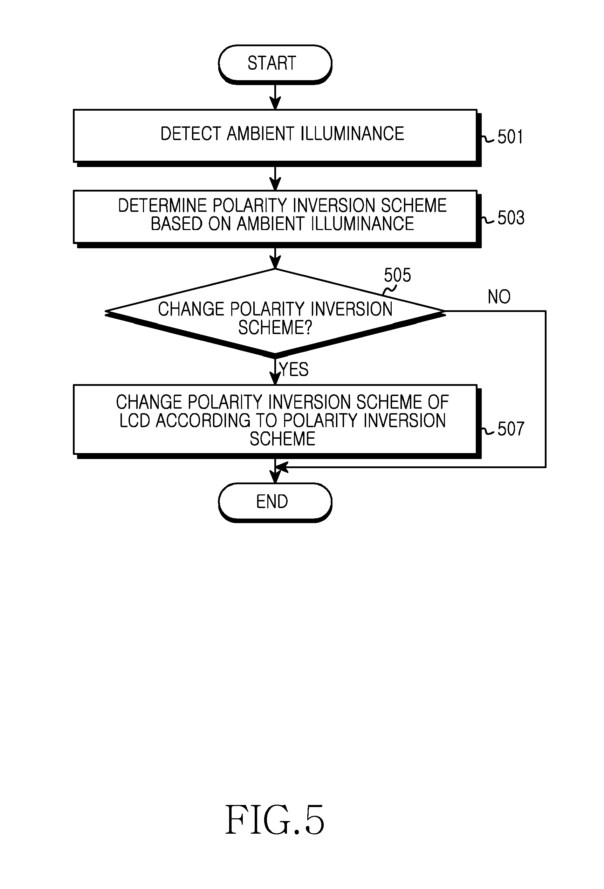

FIG. 5 is a flowchart of a method for selecting the polarity inversion scheme in the electronic device according to another exemplary embodiment of the present invention.

Referring to FIG. 5, the electronic device detects the ambient illuminance in step 501. To this end, the electronic device can measure the ambient illuminance using the sensing module 140.

In step 503, the electronic device determines the polarity inversion scheme by considering the ambient illuminance. For example, the electronic device can select a desired polarity inversion scheme corresponding to the detected ambient illuminance from a polarity inversion table, which provides the polarity inversion information based on different levels of illuminance. More specifically, the electronic device may determine the desired polarity inversion scheme by comparing the selection reference value of the polarity inversion scheme with the ambient illuminance. The selection reference value of the polarity inversion scheme can include a plurality of values. For example, when selectively using the four polarity inversion schemes of FIG. 3 according to the illuminance, the electronic device includes three polarity inversion selection reference values. Hence, when the detected ambient illuminance is greater than the first polarity inversion selection reference value, the electronic device can determine the dot inversion as the desired polarity inversion scheme of the LCD. By contrast, when the ambient illuminance is smaller than the first polarity inversion selection reference value but greater than the second polarity inversion selection reference value, the electronic device can determine the line inversion as the desired polarity inversion scheme of the LCD. When the ambient illuminance is smaller than the second polarity inversion selection reference value and greater than the third polarity inversion selection reference value, the electronic device can determine the column inversion as the desired polarity inversion scheme of the LCD. When the ambient illuminance is smaller than the third polarity inversion selection reference value, the electronic device may determine the frame inversion as the desired polarity inversion scheme of the LCD.

In step 505, the electronic device determines whether to change the polarity inversion scheme of the LCD. To this end, the electronic device can determine whether the polarity inversion scheme set in the LCD is different from the polarity inversion scheme determined in step 503.

When the polarity inversion scheme set in the LCD is the same as the polarity inversion scheme determined in step 503, the electronic device determines not to change the polarity inversion scheme of the LCD. Thus, the electronic device finishes this process.

By contrast, when the polarity inversion scheme set in the LCD is different from the polarity inversion scheme determined in step 503, the electronic device determines to change the polarity inversion scheme of the LCD. Hence, in step 507, the electronic device can change the polarity inversion scheme of the LCD to the polarity inversion scheme determined in step 503.

As such, when determining the polarity inversion scheme of the LCD according to the ambient illuminance, the electronic device can apply the polarity inversion scheme (e.g., the dot inversion) which effectively removes the flicker noise in the dark region with the low illuminance.

By contrast, in the bright region with the great illuminance, the electronic device can save the power using the polarity inversion scheme (e.g., the frame inversion) of less power consumption. In so doing, the electronic device can change the polarity inversion scheme which does not allowing the user to perceive the flicker noise and also consumes less power.

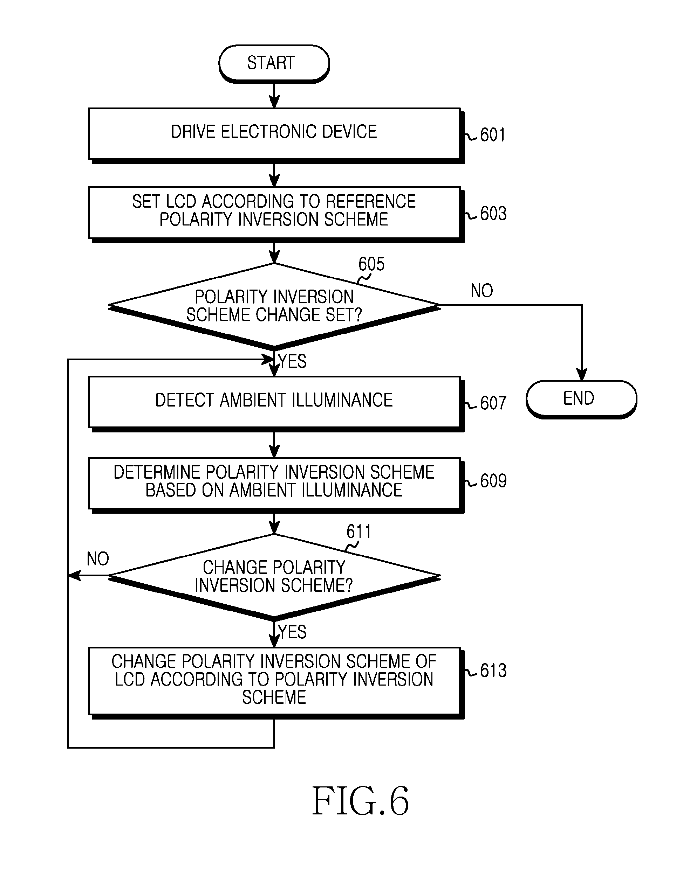

FIG. 6 is a flowchart of a method for selecting the polarity inversion scheme in the electronic device according to yet another exemplary embodiment of the present invention.

Referring to FIG. 6, when the electronic device drives in step 601, the electronic device configures the LCD according to a reference polarity inversion scheme in step 603. For example, when the reference polarity inversion scheme is set to the dot inversion, the electronic device can set the LCD in the dot inversion scheme. Also, when the reference polarity inversion scheme is set to the frame inversion, the electronic device may set the LCD in the frame inversion scheme.

In step 605, the electronic device determines whether there is a need to change the polarity inversion scheme according to the lightness information. To this end, the electronic device can determine whether a polarity inversion change menu is set.

When not determined to change the polarity inversion scheme, the electronic device finishes this process.

By contrast, to change the polarity inversion scheme, the electronic device detects the ambient illuminance in step 607. To achieve this, the electronic device can measure the ambient illuminance using the sensing module 140.

In step 609, the electronic device determines the polarity inversion scheme by considering the ambient illuminance. For example, the electronic device can select the polarity inversion scheme corresponding to the ambient illuminance from the polarity inversion table, which includes the polarity inversion information based on the illuminance. For example, the electronic device may determine the polarity inversion scheme by comparing the polarity inversion selection reference value with the ambient illuminance.

In step 611, the electronic device determines whether to change the polarity inversion scheme of the LCD. For example, the electronic device can determine whether the polarity inversion scheme set in the LCD is different from the polarity inversion scheme determined in step 609.

When the polarity inversion scheme set in the LCD is the same as the polarity inversion scheme determined in step 609, the electronic device determines not to change the polarity inversion scheme of the LCD. Accordingly, the electronic device can detect the ambient illuminance again in step 607.

By contrast, when the polarity inversion scheme set in the LCD is different from the polarity inversion scheme determined in step 609, the electronic device determines to change the polarity inversion scheme of the LCD. Hence, in step 613, the electronic device can change the polarity inversion scheme of the LCD to the polarity inversion scheme determined in step 609.

Accordingly, when determining the polarity inversion scheme of the LCD according to the ambient illuminance, the electronic device can apply the polarity inversion scheme (e.g., the dot inversion) which effectively removes the flicker noise in the dark region with the low illuminance.

By contrast, in the bright region with the great illuminance, the electronic device can save the power using the polarity inversion scheme (e.g., the frame inversion) of less power consumption. In so doing, the electronic device can adopt the polarity inversion scheme, which does not allowing the user to perceive the flicker noise among the polarity inversion schemes, and uses less power consumption.

As set forth above, the electronic device adaptively applies the polarity inversion to the LCD according to the surrounding environment information. Therefore, the electronic device can reduce the power consumption of the LCD and improve the image quality of the LCD.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for determining a polarity inversion scheme of a Liquid Crystal Display (LCD) in an electronic device, comprising:
detecting an illuminance level around the electronic device; and
determining the polarity inversion scheme of the LCD corresponding to the detected illuminance level.

2. The method of claim 1, wherein the detecting of the illuminance value comprises:
detecting at least one of a brightness value and an illuminance value around the electronic device.

3. The method of claim 1, wherein the determining step comprises:
selecting one of a frame inversion scheme, a line inversion scheme, a column inversion scheme, and a dot inversion scheme.

4. The method of claim 3, wherein the determining step comprises:
when the detected illuminance level is greater than a reference value, selecting the dot inversion scheme.

5. The method of claim 3, wherein the determining step comprises:
when the detected illuminance level is smaller than the reference value, selecting the frame inversion scheme.

6. The method of claim 5, wherein the reference value is determined by a flicker noise level perceivable based on the detected illuminance level.

7. The method of claim 1, wherein the determining step comprises:
comparing the detected illuminance level to a predetermined table having different polarity inversion scheme information corresponding to different illuminance levels.

8. An electronic device comprising:
a Liquid Crystal Display (LCD);
a sensor for detecting an illuminance level;
one or more processors;
a memory; and
a program stored in the memory and driven by the one or more processors,
wherein the processor determines a polarity inversion scheme of the LCD corresponding to the detected illuminance level.

9. The electronic device of claim 8, wherein the sensor detects at least one of a brightness value and an illuminance value around the electronic device.

10. The electronic device of claim 8, wherein the processor selects one of a frame inversion scheme, a line inversion scheme, a column inversion scheme, and a dot inversion scheme.

11. The electronic device of claim 10, wherein, when the detected illuminance level is greater than a reference value, the processor selects the dot inversion scheme.

12. The electronic device of claim 10, wherein, when detected illuminance level is smaller than the reference value, the processor selects the frame inversion scheme.

13. The electronic device of claim 11, wherein the reference value is determined by a flicker noise level perceivable based on the detected illuminance level.

14. The electronic device of claim 8, wherein the processor selects the polarity inversion scheme corresponding to the detected illumnance level by comparing the detected illuminance level to a predetermined table having different polarity inversion scheme information corresponding to different illuminance levels.
